# EUROPEAN PATENT APPLICATION

(11) **EP 2 174 977 A1**
(43) Date of publication of application: **14.04.2010**
(21) Application number: 08253259.9
(22) Date of filing: 07.10.2008
(51) Int. Cl.: C08J 11/12, C08L 21/00

(54) **Process of recovering carbon black from vulcanised rubber**

(71) Applicant: Imperial Innovations Limited, London SW7 2AZ (GB)
(72) Inventor: The designation of the inventor has not yet been filed
(74) Representative: Hedley, Nicholas James Matthew

(57) **Abstract**

A process is described of recovering carbon black from a rubber materialcontaining carbon black , e.g. used tyres. The process comprises:
granulating the rubber so that at least 80% (by weight) of the granules have a maximum dimension of less than or equal to 7 mm and a minimum dimension of greater than or equal to 2mm;
subjecting the granules to microwave radiation at a power and for a duration sufficient to substantially complete devulcanisation of the rubber,
controlling the devulcanisation process so that it is conducted at a temperature in the range of 250°C to 800°C, e.g. 300°C - 700°C, such as 400°C-600°C, and
recovering the solid residue remaining, which comprises carbon black.

## Description

### Technical Field

The present invention relates to the recovery of carbon black from waste vulcanised rubber, especially from vehicle tyres but the invention is not limited to vehicle tyres and extends also to rubber used in other applications, for example in conveyor belts.

### Background Art

Carbon black is a form of elemental carbon that is amorphous, has a high surface area and a small granule size, typically less than about 350 nm. It is often included in rubber products to improve their tensile and abrasion wear properties and is included in tyres in amounts of about 30% of the total rubber composition. Carbon black is produced by the incomplete combustion of oils and contributes substantially to the cost of reinforced rubber and especially tyres. It is a dielectric and can be heated via microwave radiation. Accordingly, when incorporated into rubber, it is possible to heat the rubber by bombarding it with microwave radiation.

There have been numerous proposals to dispose of used tyres and other vulcanised rubber scrap material by breaking the vulcanisation bonds by heating the rubber; e.g. using microwave radiation. For example, US-5316224 discloses a method of irradiating rubber compositions containing carbon black to form gases or vapours that can be at least partially condensed to form an oil. A solid residue is formed which contains elemental carbon. Other examples of such processes can be found in: US-7101464; US-53306231; US-5084141; JP-2006349224; WO 01/03473; WO 2005/073344 and US-4647443. Some processes claim that carbon black can be recovered from the solid residue and recycled.

Direct heating of tyres (e.g. by placing the tyres in an oven), will also break down the vulcanisation bonds; for example US-4647443 discloses a method of pyrolising whole tyres by heating them to a temperature of 800°C to 1100°C; the devulcanised elastomers form vapours that can be condensed to an oil. A char remains that may be heated to 815°C to 870°C to drive off volatile materials and produce carbon black.

The present invention is specifically directed to the recovery of carbon black from vulcanised rubber loaded therewith, especially tyres, and is based on the realisation that the recovery of carbon black can be improved by adopting certain parameters in the microwaving of such rubber and it is thereby possible to obtain carbon black in a relatively pure form. The aim of the present invention is to provide carbon black as opposed the less amorphous (more crystalline) forms of elemental carbon.

### Disclosure of the Invention

The present invention provide a process of recovering carbon black from rubber material loaded therewith, as defined in the accompanying claims.

As previously stated, the present invention is based on the realisation that the recovery of carbon black can be significantly improved by controlling certain process parameters in the microwaving of vulcanised rubber, especially waste rubber derived from tyres or other sources.

Microwave heating of rubber material containing carbon black heats the rubber and causes the vulcanisation bonds (carbon-sulphur bonds and sulphur-sulphur bonds) to be broken. Microwave heating can also cleave the elastomer molecules, thereby reducing the molecular weight of the polymer chains, making them volatile at the reaction temperature so that they vaporise. Many of the elastomer gases/vapours can be condensed in a cold trap, especially those with four or more carbon atoms, to form an oil, which can either be further processed using petroleum cracking technology or used as an energy source, e.g. bunker oil.

We have found that it is important to the recovery of carbon black from the process to form the rubber into rubber granules and to restrict the size of the rubber granules that are subject to microwave devulcanisation. If the granules are too large, this can lead to incomplete vulcanisation in the middle of the granule or, if the devulcanisation process is continued for long enough to complete devulcanisation in the middle of the granule, the carbon on the outside of the granule can be subject to re-crystallisation, which looses the amorphous nature of the carbon black. On the other hand, the reaction is difficult to control if the rubber granule size is too small since it tends to proceed at a high rate and a high temperature, leading to the presence of a high polymer residue (char) and the recrystallisation of the carbon black; the reaction can even explode. Also, small granules tend to pack down tightly together, which can obstruct the microwave radiation reaching the interior of the packed solid, thereby causing incomplete devulcanisation in interior regions of the rubber.

The length of any granule, i.e. the longest distance in a straight line between two opposed edges of the granule, should not exceed about 7mm and the minimum dimension between two opposed edges of any granule should not be smaller than 2mm.Depending on the way that the tyre is fragmented, the granules may have an irregular shape and so a pragmatic view of whether a particle substantially falls within the above criteria should be taken. For example, if a particle has a thin whisker projecting from a more substantial mass that forms the rest of the granule, the dimensions across the substantial mass should be taken and the whisker should be ignored. Alternatively or in addition, the granules can be defined as having a volume between 8mm³ and 350mm³, typically between 50mm³ and 200mm³ and preferably between 90mm³ and 150mm³. Naturally, there will be a substantial amount of variation in the size of the rubber feedstock and it will be difficult to ensure that all the feedstock have granule sizes within the ranges mentioned above. However, it is possible to tolerate at least a proportion of the feedstock granules being outside the size ranges being discussed above and generally as long as at least 80% (by weight) of the rubber feedstock for recovering carbon black has the above granule size, then the process should proceed satisfactorily. Naturally, it would be preferred that as much as possible, e.g. at least 90%, of the feedstock falls within the above size ranges.

Granules of the above size have been found to pack loosely, allowing good access to microwave radiation to all the granules, particularly if they are agitated during the devulcanisation process, for example by being stirred. These granule sizes, when under properly controlled microwave exposure, can also provide amorphous carbon black that can readily be recycled and used in other rubber compositions because they allow the vulcanised rubber to be broken down almost completely without substantially adversely affecting the quality of the carbon black in the residue.

Another important aspect to the recovery of carbon black from the microwave devulcanisation process is the temperature. The temperature should be controlled so that it is above 250°C, e.g. above 370°C and more preferably above 400°C in order for the devulcanisation procedure to occur smoothly. However, temperatures above 800°C can cause rearrangements in the carbon black to form less amorphous elemental carbon, which is undesirable. The maximum temperature may, therefore, be controlled so that it is not greater than 800°C, for example up to 700°C such as up to 600°C. The maintenance of the temperature in the range of 400° to 600° C has been found to provide satisfactory results.

One of the features of microwave heating is that "hot spots" are generated and, in order to avoid the temperatures in the "hot spots" rising to unacceptable levels, it is preferred to move the granules, for example by rotating the reaction vessel, or to agitate the granules, e.g. by stirring or by passing a gas through the granules during microwave radiation, to provide a more uniform exposure of the granules to microwave radiation.

The temperature of the reaction process and the temperature of the hotspots can be controlled by adjusting the power supplied to the magnetron and/or switching the magnetron off and on in controlled cycles; the latter procedure is used in domestic microwave ovens to adjust the power delivered to the food being cooked. The reaction temperature can also be controlled by adjusting the flow of inert gas through the rubber particles in the course of the reaction..

Traditional thermocouples cannot be used to measure the temperatures in the course of microwave heating because of their interaction with the electromagnetic field produced by the microwave. Instead, an infrared/visible radiation sensor may be used that measures the wavelength of the radiation emitted by the hot rubber granules; the wavelength of the infrared radiation is of course indicative of the temperature.

The optimum temperature of the reaction will depend on many factors and should, for a given set of parameters, be determined by careful experiment..

A third aspect to the present invention is to monitor the gases evolved in the course of the devulcanisationary action, especially H₂S, which is indicative of the breaking of the vulcanisation (-C-S- and -S-S-) bonds in the rubber. Thus the onset of the evolution of gases indicates that the reaction has started and the reduction in the volume of gases indicates that the reaction is slowing down (and therefore the temperature needs to be increased) or is nearing completion. The evolution of a large volume of H₂S per unit of time may indicate that the reaction is proceeding too quickly and therefore the reaction temperature is too hot and should be reduced

The gases can be monitored, for example, by a fast, on-line or a remote gas chromatograph.

The devulcanisation will generally be performed under an inert (i.e. oxygen free or low oxygen) atmosphere. The most effective way of achieving this is to provide a nitrogen atmosphere above the reaction and in particular to maintain a stream of nitrogen over the rubber granules in the course of devulcanisation which will also act to sweep away the reaction products. The nitrogen may be recycled after removal of condensable gases using cold traps and non-condensable gases by absorption or chemical reaction, e.g. a lead nitrate trap (see below) or, in the case of light hydrocarbon gasses, by combusting them, e.g. in a gas engine or similar power generating device to produce electrical energy to operate the process.

The gases formed in the course of devulcanisation will contain substantial elements that are liquid at room temperature and these fractions may be caught by passing the evolved gas though cold traps, for example ice traps. Non-condensable organic materials may be caught in a wash trap, for example a trap containing an organic solvent, e.g. toluene. The vulcanising sulphur in the rubber will generally form hydrogen sulphide which can be trapped using a lead nitrate trap, which forms lead sulphide with hydrogen sulphide.

Any frequency of microwave radiation may be used to heat and devulcanise the rubber, although the frequencies available for use are subject to government control. The most usual frequency used, for example in microwave ovens, is 2.45 GHz and that has provided satisfactory for the purpose of the present invention.

Used tyres and other rubber waste will often contain metal and/or textile reinforcement, for example, nylon fabric. The rubber feedstock may contain limited amounts of these materials; metal reinforcement can cause problems in the microwaving procedure since it can cause sparks and localised over-heating and its presence should therefore be avoided if feasible. Fabric reinforcement will not be broken down by microwave radiation in the same way as the vulcanised rubber bonds are broken and generally they form charred remains that are mixed with the carbon black. These remains can be removed in the course of processing of the carbon black, e.g. by screening, but it would generally be better to avoid the inclusion of the fabric reinforcement if possible.

The vulcanised rubber feedstock may be natural rubber or synthetic rubber, e.g. styrene-butadiene rubber (SBR) or cis-polybutadine rubber, or a mixture. It may contain other materials, such as steric acid and zinc oxide, which act as accelerator-activators and silica (silicon dioxide). The steric acid will generally be eliminated at the temperatures of the process but the zinc oxide and silica will be retained and will report in the carbon black product. However the presence of zinc oxide and silica in the carbon black is not detrimental since they will be re-used when the carbon black is recycled and compounded with further rubber that is subject to vulcanisation; the recycled zinc oxide and silica will actually reduce the requirement to add these materials afresh. The rubber may also include antioxidants, antizonants, processing aids, softeners, accelerators and retarders and indeed any additive that is customary included in rubber.

Although the present invention is discussed in terms of recovery of carbon black, it will be appreciated that the present invention recycles used rubber and avoids its disposal, for example in the burning of rubber, for example as a fuel in cement furnaces, which can give rise to atmospheric pollution. Furthermore, the disposal of waste rubber is often controlled by legislation. It also produces a valuable light oil, which can either be further processed to separate valuable components such as limonene or using petroleum cracking technology or used as an energy source, e.g. as diesel or bunker oil

The rubber granules that form the feedstock of the present process can be in the form of rubber tyre crumb, which is produced commercially and is used in other applications, for example to make surfaces for sports facilities and playgrounds. Reclamation of rubber usually takes place through a mechanical processing, such as grinding, which involves passing shredded waste tyres through a series of mills, granulators, textile separators and metal separators. The desired granule size may be achieved through grinding and sieving. Alternatively, the waste rubber granules may be obtained by cryogenic fragmentation, which involves cooling shredded tyres to less than -80°C using liquid nitrogen, which makes the rubber brittle and it can then be transferred to a hammer mill, where it is ground. The resulting granules can be sieved according to size.

The solid product remaining at the end of the microwave processing will mostly consist of carbon black; the carbon black may form into loose agglomerates that can easily be broken up by crushing. The solid product may also include organic residues, which will often coat the carbon black granule. If the destined use of the carbon black can tolerate such residues, then no further processing is required. However, if it is advantageous to remove these residues, the carbon black can be subject to subsequent processing to remove the residues, for example using solvents and/or by heating the carbon black.

### Description of Drawings

There will now be described, by way of example only, various processes of obtaining carbon black from used tyres using the process of the present invention.

### Reference to the accompanying drawings:

Figure 1 is schematic view of an apparatus for performing the devulcanisation process in accordance with the present invention;
Figure 2 a to c are graphs showing the yields of the various products of the microwave devulcanisation process under different process conditions; and
Figure 2d is a graph showing the yield of the solid residue formed by the microwave devulcanisation process

### Detailed Description of the Invention and Mode for Putting the Invention into Operation

The following description shows a series of experiments using the various types of rubber feedstock prepared as follows (except as specifically stated, all the tyre rubber granules were formed solely of rubber and so do not include any reinforcing steel or fabric):

| **SAMPLE ID** | **DESCRIPTION** |
|---|---|
| 2-5 mm HC | Tyre rubber granules that were cut manually into chunks in which all of the measurements of the chunks are within the range of 2 - 5 mm. |
| 0.7-1.0 cm LHC | Tyre rubber granules whose dimensions fall within the range of 0.7-1.0 cm. |
| 0.7-1.0 LHC w/nylon | Tyre rubber granules whose dimensions fall within the range of 0.7-1.0 cm. The granules contains nylon or rayon textile in each granule. |
| 2-6 mm | Tyre rubber crumb having a granule size of 2-6 mm |
| 2-5 mm | Tyre rubber crumb having a granule size of 2-5 mm |
| 1.4-2 mm | Tyre rubber crumb having a granule size of 1.4-2 mm |
| 1.5 x 5 mm shredded | Shredded tyre strips with approximate dimensions of 1.5 x 5 mm |
| 0.63-1.4mm | A fine tyre powder material having a granule size in the range of 0.63 to 1.4 mm. |

The difference between samples 2-5 mm HC (standing for "hand cut") and 2-5mm is that the former consists of cubes that have been hand cut and are of more uniform granule size than the latter, where the granules are crumb of irregular shape and dimensions produced by mechanical grinding.

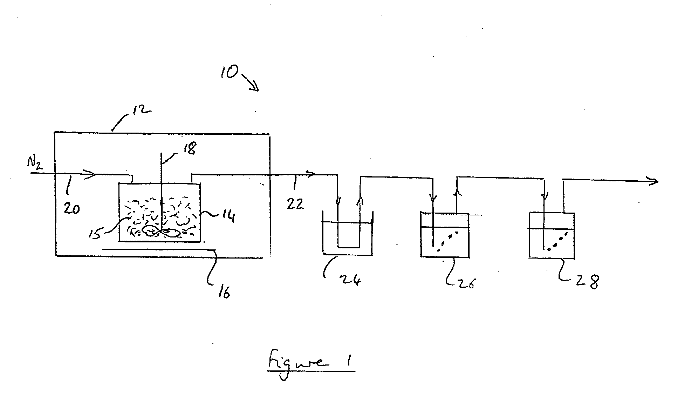

An apparatus 10 suitable for carrying out the process of the present invention is shown schematically in Figure 1. It includes a microwave cavity 12 into which microwave radiation at 2.45 Ghz is directed from a magnetron (not shown) within the microwave cavity there is a container 14 containing rubber granules 15. The container 14 is transparent to microwave radiation and must be able to tolerate the reaction temperatures, e.g. quartz glass, and it may be supported on a turntable 16. In addition to or instead of a turntable 16, a stirrer 18 may be provided for stirring the rubber granules 15. The stirrer and the turntable are not essential since the rubber granules can be moved around by the passage of inert gas, e.g. nitrogen, through the rubber granules (see below), which also cools the rubber during the microwave heating.

Container 14 is closed apart from gas inlet and outlet lines 20, 22 which provide a flow of nitrogen through the container and carry off reaction products. These lines 20, 22 should be heat resistant and should not be susceptible to microwave heating, e.g. they may be made out of PTFE. The gases and vapours given off during the course of the devulcanisation reaction of the rubber granules 15 flow along line 22, to a cold trap 24, which may be formed by one or more dreshel bottles in an ice bath. Oil will condense in the bottom of the trap which may be periodically or continuously emptied. The uncondensed vapour is then passed to a toluene trap 26 for removing uncondensed organic materials from the gas stream. The gas stream leaving toluene trap 26 is largely composed of nitrogen, hydrogen sulphide, carbon monoxide, carbon dioxide and non-condensable hydrocarbon gases, e.g. methane produced by the process; the non-condensable hydrocarbon gases may be recovered or burnt. The hydrogen sulphide is removed in a lead nitrate trap 28 in which the hydrogen sulphide reacts with the lead nitrate to form an insoluble lead sulphide precipitate. The gases leaving the lead nitrate trap 28 contain nitrogen, carbon monoxide, carbon dioxide and the non-condensable hydrocarbon gases; the carbon monoxide can be oxidised to carbon dioxide and the resulting gas can be released to atmosphere. In addition to providing an inert atmosphere in the container 14, the nitrogen supplied along line 20 can be used to control the temperature of the reaction.

The microwave cavity 12 is the cavity of a standard 850W domestic microwave oven operating at 2.45 GHz. The oven was modified by drilling holes in the side walls to accommodate the gas lines 20, 22. In the experiments, for simplicity, neither the turntable 16 nor the stirrer 18 was used.

In the following examples, the following test procedure was followed:
15 grams of rubber granules were placed in a 100 ml round bottom flask. The set up was purged with nitrogen at a flow rate of 1 litre per minute for about two minutes.

With the nitrogen still flowing, the microwave oven was programmed to heat the sample according to a required power level for a heating duration. The mass of the solid residue remaining at the end of each test and the mass of the liquid product caught in the trap 24 were determined by weighing. The amount of gaseous product was determined by the difference between the starting mass of rubber granules and the combined masses of the solid residue and trapped liquid products.

In all tests, devulcanisation began approximately 10 to 15 seconds after microwaving started, as shown by the observation that the lead sulphide precipitate appeared very shortly after the start of the devulcanisation process. During the devulcanisation process the tyre mass exhibited a bright reddish glow and a yellowing cloudy gas was generated from the tyre solid. The devulcanisation gas bubbling through the toluene and lead nitrate traps 26, 28 caused the colour of the toluene solution to change from colourless to pale brown and resulted in the formation of a black lead sulphide precipitate. The glowing of solid mass within the reactor mostly lasted for approximately 5 minutes after which the glow slowly diminished.

The solid residue obtained after completion of the devulcansiation process was greyish black in colour and slightly granular. When ground with a mortar and pestle the granular char would disintegrate readily into a fine carbon black powder.

The amount of char residue left in the reaction vessel 14 indicates whether complete devulcanisation of the tyre granules has been achieved. The smaller amount of char indicates that most if not all the sulphur bonds in the matrix have been broken and volatile organic materials, such as extender oils and other additives, have been evaporated under the extremely high temperatures. Therefore, the remaining solid residue will be composed largely of carbon black and small amounts of inorganic ash, such as zinc oxide, silicates carbonates, zinc sulphide as well as traces of heavy metal, including lead and cadmium that were used as stabilisers during tyre compounding; since the primary use of the carbon black will be to recycle it for use again in compounding rubber, these materials can be tolerated and indeed may reduce the amounts of the same substances that need to be added to the newly compounded rubber compositions.

### Example 1

At 40% power level 2-5 mm HC tyre granules were subject to microwave treatment for six different durations. The product collected after each experiment is indicative of the progress of the devulcanisation process at that specific duration.

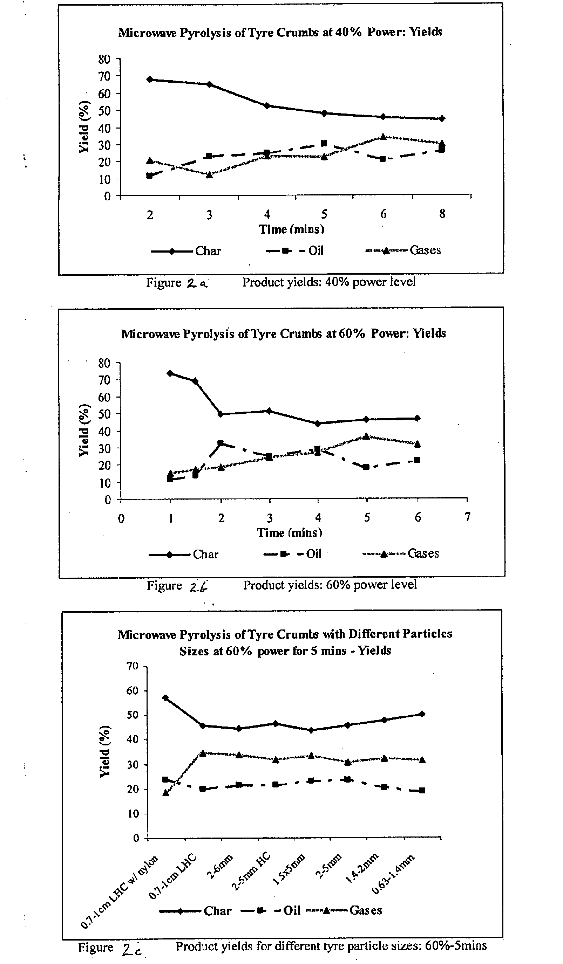

A similar series of experiments were carried out using the 60% power level. The results as set out in Table 1 and illustrated in the graphs of Figures 2a and 2b.

**Table 1**

| **Power level (%)** | **Time (mins)** | **Sample Type ID** | **Char (%)** | **Oil (%)** | **Gas (%)** |
|---|---|---|---|---|---|
| 60 | 1 | 2-5mm HC | 73.4 | 11.4 | 15.2 |
| 60 | 1.5 | 2-5mm HC | 69.1 | 14.0 | 17.0 |
| 60 | 2 | 2-5mm HC | 49.4 | 32.0 | 18.6 |
| 60 | 3 | 2-5mm HC | 51.2 | 24.6 | 24.2 |
| 60 | 4 | 2-5mm HC | 44.0 | 29.0 | 27.0 |
| 60 | 5 | 2-5mm HC | 46.1 | 17.8 | 36.1 |
| 60 | 6 | 2-5mm HC | 46.4 | 21.6 | 31.8 |
| | | | | | |
| 40 | 2 | 2-5mm HC | 67.7 | 11.5 | 20.8 |
| 40 | 3 | 2-5mm HC | 65.2 | 22.9 | 11.8 |
| 40 | 4 | 2-5mm HC | 52.2 | 24.9 | 22.9 |
| 40 | 5 | 2-5mm HC | 47.7 | 30.0 | 22.2 |
| 40 | 6 | 2-5mm HC | 45.4 | 20.7 | 33.9 |
| 40 | 8 | 2-5mm HC | 44.2 | 25.8 | 30.1 |

As can be seen, the residue/char yields decrease over time during devulcanisation at both 40% power level and 60% power level and the char yields are fairly constant after 5 minutes, indicating that the devulcanisation process has been completed. At the 60% power level, the char yields indicate that the devulcanisation process has finished after about 4 minutes.

A series of experiments were conducted at 60% power for 5 minutes using a variety of different tyre crumb granules and in particular sizes of tyre crumb granules. One of the samples included reinforcing textiles (0.7-1 cm LHC w/ nylon). The results are shown in Table 2 and Figure 2c.

**Table 2**

| **Power level (%)** | **Time (mins)** | **Sample Type ID** | **Char (%)** | **Oil (%)** | **Gas (%)** |
|---|---|---|---|---|---|
| 60 | 5 | 0.7-1cm LHC w/nylon | 57.4 | 23.9 | 18.8 |
| 60 | 5 | 0.7-1.0cm LHC | 45.8 | 19.8 | 34.4 |
| 60 | 5 | 2-6 mm | 44.7 | 21.5 | 33.8 |
| 60 | 5 | 2-5 mm HC | 46.6 | 21.6 | 31.8 |
| 60 | 5 | 1.5x 5mm shredded | 43.7 | 23.0 | 33.7 |
| 60 | 5 | 2-5 mm | 45.8 | 23.5 | 30.7 |
| 60 | 5 | 1.4-2 mm | 47.7 | 20.1 | 32.2 |
| 60 | 5 | 0.63-1.4mm | 49.9 | 18.7 | 31.4 |

As can be seen from Table 2, the char yields obtained with the textile were significantly higher than the average because the textile did not pyrolyse at the reaction temperature.

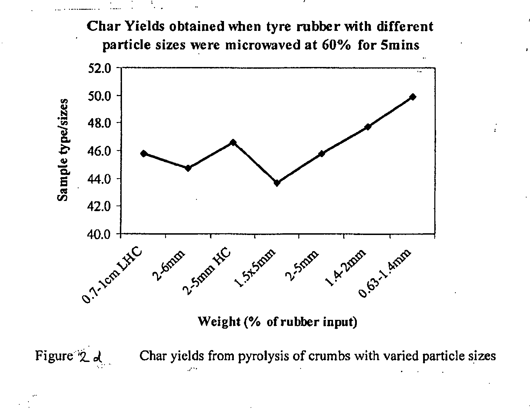

The quantities of char from the samples that did not include textiles has been separately plotted in Figure 2d from which it can be seen that the smaller crumb granule size produced higher residues which may be explained by the fact that the tyre crumbs, having small granule sizes, can pack down well within the reactive vessel, leading to non-uniform devulcanisation because the outer granules will shield the interior granules from radiation. Of the other crumb sizes, the strips 1.5 x 5 mm produced the lowest char levels, which may be caused by the poor packing of the strips, allowing microwave access throughout the sample.

### Example 2

Thermogravimetric Analysis (TGA) was carried out on the 15 char samples from Example 1 that were carried out at 60% power level. The analysis was conducted under a nitrogen atmosphere and weight change was recorded in response to increasing temperature. This gives an indication of the amount of volatile organic material still remaining within the solid residue after microwave devulcanisation. A lesser percentage weight loss during TGA indicates a lower amount of volatile organic material and therefore the better quality of the solid residue. The results are shown in Table 3 which indicates that, in the range of sizes tested, the samples with the highest granule size and the sample with the lowest granule size produce the greatest weight loss. Again, the shredded strips 1.5 x 5mm provided the lowest weight loss and accordingly the purest product.

**Table 3**

| **Power level (%)** | **Time (mins)** | **Sample Type ID** | **Weight Loss (mg)** | **Weight Loss (%)** |
|---|---|---|---|---|
| 60 | 1.5 | 2-5 mm HC | 6.22 | 37.0 |
| 60 | 1 | 2-5 mm HC | 3.13 | 21.1 |
| 60 | 2 | 2-5 mm HC | 2.20 | 13.8 |
| 60 | 3 | 2-5 mm HC | 1.77 | 10.6 |
| 60 | 4 | 2-5 mm HC | 1.03 | 6.8 |
| 60 | 5 | 2-5 mm HC | 0.82 | 5.8 |
| 60 | 6 | 2-5 mm HC | 0.46 | 3.2 |
| | | | | |
| 60 | 5 | 0.7-1cm LHC w/nylon | 2.42 | 16.0 |
| 60 | 5 | 0.7-1.0cm LHC | 0.70 | 5.2 |
| 60 | 5 | 2-6 mm | 0.70 | 4.6 |
| 60 | 5 | 2-5 mm HC | 0.82 | 5.8 |
| 60 | 5 | 1.5x 5mm shredded | 0.56 | 3.7 |
| 60 | 5 | 2-5 mm | 0.86 | 5.7 |
| 60 | 5 | 1.4-2 mm | 0.94 | 6.2 |
| 60 | 5 | 0.63-1.4mm | 1.25 | 8.0 |

As can be seen from the above results, it is possible to remove at least some of the residual organic materials by heating the residue. However, the heat treatment should not exceed 800°C or else the amorphous nature of the carbon black obtained may be lost.

## Claims

1. A process of recovering carbon black from a rubber material containing carbon black, the process comprising:
granulating the rubber so that at least 80% (by weight) of the granules have a maximum dimension of less than or equal to - 7 mm and a minimum dimension of greater than or equal to 2mm
subjecting the granules to microwave radiation at a power and for a duration sufficient to substantially complete devulcanisation of the rubber,
controlling the devulcanisation process so that it is conducted at a temperature in the range of 250°C to 800°C, e.g. 300°C - 700°C, such as 400°C-600°C, and
recovering the solid residue remaining, which comprises carbon black

2. A process as claimed in claim 1 which comprises heating the residue to a temperature not exceeding 800°C to remove volatile organic materials from the residue.

3. A process as claimed in claim 1 or claim 2, wherein at least 80% of the granules are strip shaped, e.g. with the length being at least twice the width.

4. A process as claimed in any preceding claim, wherein at least 90% (by weight) of the granules have the said dimensions.

5. A process as claimed in any preceding claim, which includes monitoring the amount of H₂S evolved by the process.

6. A process as claimed in claim 5, wherein the heating is discontinued when the amount of H₂S evolved by the process falls below a threshold level.

7. A process as claimed in any preceding claim, which includes the step of mixing the solid residue or carbon black separated therefrom with fresh rubber and vulcanising the resulting rubber composition.
